# EUROPÄISCHE PATENTSCHRIFT

(11) **EP 2 359 029 B1**
(45) Veröffentlichungstag und Bekanntmachung des Hinweises auf die Patenterteilung: **31.10.2012**
(21) Anmeldenummer: 09777718.9
(22) Anmeldetag: 07.08.2009
(51) Int. Cl.: F16H 1/32

(54) **GETRIEBE**
TRANSMISSION
TRANSMISSION

(30) Priorität: 07.08.2008 EP 08014093
(43) Veröffentlichungstag der Anmeldung: 24.08.2011
(73) Patentinhaber: Spinea S.R.O., 08005 Presov (SK)
(72) Erfinder: FECKO, Tibor, 080 01 Presov (SK)
(74) Vertreter: Jeck, Anton
(86) Internationale Anmeldenummer: PCT/EP2009/005722
(87) Internationale Veröffentlichungsnummer: WO 2010/015406

(56) Entgegenhaltungen:
- WO-A-95/22017
- WO-A-2006/058743

## Beschreibung

Die Erfindung betrifft ein Getriebe gemäß dem Oberbegriff des Anspruchs 1 bzw. wie es z. B. in Fig. 2 der WO 95/22017 A1 dargestellt ist.

Ein solches Getriebe weist einen mit einer Innenverzahnung versehenen sowie eine Drehachse aufweisenden hohlzylinderartigen Grundkörper auf. In dem Grundkörper sind ein angetriebenes Eingangsorgan und ein Ausgangsorgan um die Drehachse drehbar gelagert. Das Ausgangsorgan umfasst zwei mit Abstand zueinander angeordnete Drehkörper mit einem quer zur Drehachse kreisrunden Querschnitt. Die Drehachse steht senkrecht auf den beiden Drehkörpern. Die Drehkörper sind fest miteinander verbindbar bzw. verbunden. Zwischen den Drehkörpern sind mindestens ein das Innenzahnrad kämmendes Zahnrad sowie auch als transformierende Mittel bzw. Transformationsmittel bezeichnete Mittel zur Umwandlung von Planetenbewegungen des Zahnrades in Rotationsbewegungen des Ausgangsorgans angeordnet. Diese Transformationsmittel weisen eine zentrale Öffnung auf, durch die das Eingangsorgan hindurchgeführt ist. Das Eingangsorgan ist in den Drehkörpern des Ausgangsorgans beidseitig gelagert. Dieses ist wiederum in dem hohlzylinderartigen Grundkörper beidseitig gelagert.

Die zwei mit Abstand zueinander angeordneten Drehkörper des Ausgangsorgans sind durch außermittige Öffnungen des Zahnrads sowie in Abhängigkeit der Ausgestaltung der Transformationsmittel gegebenenfalls auch durch entsprechende außermittige Öffnungen der Transformationsmittel hindurch führende Distanzkörper miteinander verbunden. Diese Distanzkörper sind dabei derart ausgeführt, dass an beiden Drehkörpern des Ausgangsorgans jeweils Distanzkörperstümpfe, vorzugsweise integral ausgeführt, angeordnet sind. Die eigentliche Verbindung der Drehkörper erfolgt dann mittels Gewindebolzen. Diese sind durch Öffnungen in den Distanzkörperstümpfen des einen Drehkörpers hindurchgeführt und in den Distanzkörperstümpfen des anderen Drehkörpers angeordneten Gewindeaufnahmen eingeschraubt.

Nachteilig hieran ist, dass die Distanzkörper bzw. die die Distanzkörperstümpfe miteinander verbindenden Gewindebolzen hohen mechanischen Belastungen ausgesetzt sind, wodurch die auf seine z.B. äußeren Abmessungen bezogene spezifische Belastbarkeit eines solchen Getriebes eingeschränkt ist.

Ein Transformationsmittel eines eingangs beschriebenen Getriebes kann beispielsweise in Form von vier um die zentrale Öffnung kreuzförmig gleichmäßig verteilt angeordneter, paarweise gegenüberliegender Arme ausgebildet sein. Auch andere Ausführungsformen für die Transformationsmittel sind denkbar.

Am Zahnrad sowie am Ausgangsorgan sind Führungsmittel angeordnet, durch welche die Transformationsmittel einerseits unverdrehbar gegenüber dem Zahnrad und dem Ausgangsorgan angeordnet bzw. anordbar sind, und welche andererseits Translationsbewegungen der Transformationsmittel sowohl gegenüber dem Zahnrad als auch gegenüber dem Ausgangsorgan in einer Ebene normal zur Drehachse zulassen. Hierzu umfassen die Führungsmittel Linearführungen am Zahnrad, an den

Drehkörpern und an den Transformationsmitteln, welche

Führungsbahnen umfassen. Die Führungsbahnen werden durch beispielsweise an zu einer Achse parallelen Flächen von Vorsprüngen oder von korrespondierenden Ausnehmungen angeordnete Laufflächen gebildet. Zwischen den Laufflächen einer durch einen Vorsprung gebildeten Führungsbahn und den Laufflächen einer durch eine korrespondierende Ausnehmung gebildeten Führungsbahn können beispielsweise Wälzelemente angeordnet sein, die dann zwischen den Laufflächen der Führungsbahnen abwälzen.

Dabei befinden sich auf jedem der zwei Drehkörper des Ausgangsorgans eigene Führungsbahnen, welche auf jedem der Drehkörper einzeln hergestellt werden müssen. Diese Führungsbahnen sind Bestandteile der den Ausgangskörpern zugeordneten Linearführungen zwischen den Ausgangskörpern und den Transformationsmitteln.

Im Betrieb eines solchen Getriebes wird das Ausgangsdrehmoment von dem Zahnrad über ein Transformationsmittel und die einem ersten Drehkörper zugeordneten Linearführungen direkt auf die Führungsbahnen des ersten Drehkörpers des Ausgangsorgans übertragen. Mittels eines weiteren Transformationsmittels und die einem zweiten Drehkörper zugeordneten Linearführungen wird das Drehmoment auf die Führungsbahnen des zweiten Drehkörpers des Ausgangskörpers übertragen und weiter über die Distanzkörper beider Teile des Ausgangskörpers. Die Übertragung des Drehmoments wird durch die Festigkeit bzw. Steifigkeit der Verbindung der beiden Drehkörper des Ausgangskörpers beschränkt.

In Bezug auf die Linearführungen, insbesondere auf die den Ausgangskörpern zugeordneten Linearführungen zwischen den Ausgangskörpern und den Transformationsmitteln, ergibt sich bei den bekannten Getrieben daher der Nachteil, dass es für eine gewünschte Getriebefunktion erforderlich ist, die zwei Drehkörper des Ausgangsorgans derart genau miteinander zu verbinden, dass die Achsen der Führungsbahnen beider Drehkörper des Ausgangsorgans möglichst genau zueinander ausgerichtet sind. Im Falle von Leistungsgetrieben ist es daher zum einen erforderlich, dass die Führungsbahnen beider Teile des Ausgangskörpers im Herstellungsprozess die Qualität einer Lageroberfläche erreichen. Zum anderen ist es erforderlich, dass die beiden Drehkörper des Ausgangsorgans in Bezug auf ihre Drehlage sehr genau zueinander ausgerichtet sind.

Jedoch ist es aus technologischer Sicht sehr anspruchsvoll, eine derart genaue mechanische Verbindung dieser zwei Drehkörper sicherzustellen, bei denen die Achsen der Führungsbahnen genau zueinander ausgerichtet sind. In der Realität entsteht dort immer eine kleinere oder größere unerwünschte gegenseitige Verdrehung der auf den beiden Drehkörpern angeordneten Achsen der Führungsbahnen. Je kleiner das Getriebe ist, umso mehr reagiert es auf einen Ausrichtungsfehler der Achsen der Führungsbahnen. Dabei vermindert sich die Genauigkeit der Verbindung der zwei Drehkörper des Ausgangskörpers eines kleinen Getriebes im Gegensatz zu einer größeren Getriebe-Ausführung nicht wesentlich.

Darüber hinaus wird durch die Führungsbahnen, die auf beiden Drehkörpern des Ausgangskörpers des Getriebes angeordnet sind, auch der Zusammenbau des Getriebes deutlich anspruchsvoller.

Ausgehend von dem obigen Stand der Technik liegt der Erfindung die Aufgabe zugrunde, Ausrichtungsfehler der Führungsbahnen zu verringern.

Die gestellte Aufgabe wird gelöst durch die Merkmale des Anspruchs 1.

Zur Lösung der Aufgabe vorgesehen ist demnach ein Getriebe mit einem eine Innenverzahnung sowie eine Drehachse aufweisenden hohlzylinderartigen Grundkörper, in dem ein angetriebenes Eingangsorgan sowie ein Ausgangsorgan drehbar gelagert sind. Das Ausgangsorgan umfasst zwei mit Distanzkörpern unverdrehbar miteinander verbundene, jeweils einen quer zur Drehachse kreisrunden Querschnitt aufweisende Drehkörper. Zwischen den Drehkörpern sind mindestens ein Zahnrad sowie mindestens ein Transformationsmittel zur Umwandlung von Planetenbewegungen des Zahnrades in Rotationsbewegungen des Ausgangsorgans angeordnet.

Die Distanzkörper weisen gleichzeitig Laufflächen der dem Ausgangsorgan zugeordneten Führungsbahnen der Linearführungen zwischen Ausgangsorgan und Transformationsmittel auf bzw. bilden diese. Die dem Zahnrad bzw. dem Transformationsmittel zugeordneten Führungsbahnen mit Laufflächen der Linearführungen zwischen Zahnrad und Transformationsmittel werden durch andere geeignete Mittel gebildet.

Dabei ist vorgesehen, dass die Distanzkörper jeweils derart einstückig ausgebildet sind, so dass sich jeder Distanzkörper einstückig zumindest über die ganze freie innere Länge zwischen den beiden Drehkörpern erstreckt.

Vorteile der Erfindung gegenüber dem Stand der Technik ergeben sich unter anderem dadurch, dass beim erfindungsgemäßen Getriebe geringere Belastungen an den zur Verbindung der beiden Drehkörper zu dem Ausgangsorgan verwendeten Gewindebolzen auftreten. Dadurch können im Vergleich zu einem Getriebe nach dem Stand der Technik höhere Leistungsdaten erzielt werden.

Die Distanzkörper können alle integraler Bestandteil eines Drehkörpers sein, sie können aber auch diagonal gegenüberliegend abwechselnd oder benachbart paarweise integrale Bestandteile des einen bzw. des anderen Drehkörpers sein. Denkbar ist auch, dass die Distanzkörper über die ganze freie innere Länge oder über einen Teil der freien inneren Länge ineinander greifen.

Ebenfalls ist denkbar, dass die Distanzkörper unabhängige Einzelteile von den Drehkörpern sind, die mit beiden Drehkörpern jeweils mit Gewindebolzen oder dergleichen verbunden sind.

Vorzugsweise sind an den Stellen eines Drehkörpers, an denen ein Distanzkörper mit diesem lösbar verbunden bzw. verbindbar ist, Ausnehmungen zur Aufnahme der Distanzkörper ausgebildet. Diese Ausnehmungen können mit der Querschnittsform der Distanzkörper korrespondieren, so dass eine einbausichere Lage der Distanzkörper gewährleistet ist.

Dadurch, dass zumindest die Führungsbahnen mit Laufflächen der dem Ausgangsorgan zugeordneten Linearführungen zwischen Ausgangsorgan und Transformationsmittel durch die Distanzkörper gebildet werden, wird eine erhebliche Verringerung des Herstellungsaufwands für die Führungsbahnen des Ausgangsorgans erreicht. Darüber hinaus wird auf einfache Weise sichergestellt, dass die Achsen der den beiden Drehkörpern des Ausgangsorgans zugeordneten Führungsbahnen der Linearführungen zwischen Ausgangsorgan und Transformationsmittel genau zueinander ausgerichtet sind.

Ein weiterer Vorteil gegenüber dem Stand der Technik ergibt sich dadurch, dass die Anzahl von Zahnrädern und Transformationsmitteln nicht mehr auf die Anzahl der Drehkörper des Ausgangsorgans beschränkt ist. Da die Führungsbahnen durch die Distanzkörper gebildet werden, welche vorzugsweise einstückig die gesamte freie innere Länge zwischen den beiden Drehkörpern des Ausgangsorgans überbrücken, können beliebig viele Zahnräder und Transformationsmittel zwischen den Drehkörpern angeordnet werden. Hierdurch lassen sich die Leistungsdaten eines Getriebes weiter erhöhen.

Vorteile der Erfindung gegenüber dem Stand der Technik ergeben sich unter anderem dadurch, dass die Führungsbahnen des Ausgangsorgans, da sie durch die vorzugsweise jeweils einstückig sich zumindest über die freie Länge zwischen den beiden Drehkörpern des Ausgangsorgans erstreckende Distanzkörper gebildet werden, in Bezug auf ihre Drehlage zuverlässig sehr genau zueinander ausgerichtet sind. Dadurch wird die Lebensdauer des Getriebes erhöht, und gleichzeitig wird der Verschleiß verringert. Weiterhin erreicht ein erfindungsgemäßes Getriebe dadurch bessere, d.h. bei gleichen Abmessungen und bei gleichem Gewicht höhere Leistungsdaten als ein vergleichbares Getriebe nach dem Stand der Technik.

Weitere Vorteile ergeben sich dadurch, dass die Führungsbahnen bzw. die Laufflächen der Führungsbahnen des Ausgangsorgans einfach herstellbar sind. Die Distanzkörper können einfach gehandhabt und beispielsweise einzeln bearbeitet werden. Darüber hinaus können so sämtliche Führungsbahnen des Ausgangsorgans auf einmal hergestellt werden. Es müssen nicht mehr wie beim Stand der Technik beide Drehkörper mit eigenen Führungsbahnen versehen werden.

Ferner müssen nur die auf den Distanzkörpern angeordneten bzw. durch diese gebildeten Laufflächen der Führungsbahnen die Qualität einer Lageroberfläche aufweisen, wodurch nur jeweils dieser durch die Laufflächen gebildete Teil der Distanzkörper geeignet behandelt und/oder aus einem geeigneten Lagerwerkstoff hergestellt werden muss. Es wird dadurch erreicht, dass nur noch die auf den Distanzkörpern angeordneten bzw. durch diese gebildeten Laufflächen der Führungsbahnen entsprechend hergestellt bzw. bearbeitet werden müssen. Dadurch können beispielsweise andere Flächen einfacher ausgestaltet und bearbeitet werden. Ebenso ergibt sich die Möglichkeit, andere Elemente des Ausgangsorgans, z. B. die Drehkörper, aus leichteren und weniger schwer zu bearbeitenden Werkstoffen herzustellen. So können beispielsweise die Drehkörper zur Gewichtsverringerung aus einem Aluminiumwerkstoff bzw. einer geeigneten Legierung hergestellt werden.

Um die Drehkörper des Ausgangsorgans z. B. aus Aluminium oder aus einem nicht zur Herstellung einer gehärteten Lageroberfläche geeigneten Werkstoff herstellen zu können, ohne dass die Leistungsdaten, insbesondere die Standfestigkeit eines erfindungsgemäßen Getriebes verringert wird, können beispielsweise zwischen den Drehkörpern des Ausgangsorgans und den Transformationsmitteln Plättchen aus gehärtetem Werkstoff angeordnet werden. Diese bilden Gleitflächen zwischen den Transformationsmitteln und den Drehkörpern des Ausgangsorgans. Die Plättchen können beispielsweise mit den Drehkörpern des Ausgangsorgans verbunden werden.

Die Führungsbahnen sind nur noch auf einem Bauteil, nämlich dem sich über die ganze freie innere Länge zwischen den beiden Drehkörpern erstreckenden Distanzkörper angeordnet. Mit anderen Worten sind bei einem solchen erfindungsgemäßen Getriebe die Führungsbahnen im Gegensatz zum Stand der Technik nur noch an einem Bauteil, dem Distanzkörper, und nicht mehr an zwei Bauteilen, den beiden Drehkörpern, angeordnet. Dadurch müssen die Führungsbahnen nicht mehr wie beim Stand der Technik einzeln, sondern können gemeinsam hergestellt werden, wodurch Ausrichtungsfehler verringert werden.

Ein solches Getriebe hält auf dessen Abmessungen bezogen hohen spezifischen Belastungen stand. Ebenso ist ein solches Getriebe im Vergleich zum Stand der Technik einfacher herstellbar und einfacher zu montieren. Letzteres ist dadurch bedingt, dass die Montage der zwischen den Drehkörpern angeordneten Teile des Getriebes nunmehr vollständig von einem der beiden Drehkörper ausgehend erfolgen kann. Alle Teile werden dabei zwischen die beispielsweise vorher mit einem ersten Drehkörper verbundenen, oder als integrale Bestandteile dieses ersten Drehkörpers ausgebildeten Distanzkörper eingelegt. Hierzu kann zunächst der erste Drehkörper mit seiner den Distanzkörpern abgewandten Fläche auf eine ebene Unterlage gelegt werden. Anschließend werden die im montierten Zustand zwischen den beiden Drehkörpern befindlichen Teile zwischen die Distanzkörper eingelegt. Dann kann der Grundkörper des Getriebes über die diese vormontierte Einheit gestülpt werden. Abschließend wird der zweite Drehkörper von oben aufgelegt und unverdrehbar mit dem ersten Drehkörper verbunden, indem der zweite Drehkörper mit den Distanzkörpern beispielsweise durch Verschrauben mittels Schraubbolzen verbunden wird. Das Getriebe kann damit zu keiner Zeit während der Montage auseinander fallen.

Vorzugsweise ist mindestens ein Transformationsmittel vorgesehen, welches kreuzförmig mit vier gleichmäßig um eine zentrale Öffnung herum angeordneten Armen ausgebildet ist. Zwei der auf einer gemeinsamen Achse liegenden Arme greifen in durch an den Distanzkörpern angeordnete Laufflächen gebildete, dem Ausgangsorgan zugeordnete und einander gegenüberliegende Führungsbahnen der Linearführung zwischen Ausgangsorgan und Transformationsmittel.

Weitere zweckmäßige und vorteilhafte Ausgestaltungen der Erfindung gehen aus den abhängigen Ansprüchen und der nachfolgenden Beschreibung von Ausführungsbeispielen hervor.

Ausführungsbeispiele der Erfindung sind in den Zeichnungen schematisch dargestellt und werden im Folgenden näher erläutert. In den Zeichnungen bezeichnen gleiche Bezugszeichen gleiche oder gleich wirkende Elemente. Es zeigen:
- Fig. 1: eine schematische Darstellung eines ersten Ausführungsbeispiels eines erfindungsgemäßen Getriebes in einer Explosionsdarstellung,
- Fig. 2: eine schematische Darstellung des Getriebes aus Fig. 1 in zusammengebautem Zustand in einer Ansicht von dessen Antriebsseite her,
- Fig. 3: eine schematische Darstellung des Getriebes aus Fig. 1 in zusammengebautem Zustand in einem Schnitt entlang der Linie I-I nach Fig. 2,
- Fig. 4: eine schematische Darstellung des Getriebes aus Fig. 1 in zusammengebautem Zustand in einem Schnitt entlang der Linie II-II nach Fig. 3,
- Fig. 5: eine schematische Darstellung des Getriebes aus Fig. 1 in zusammengebautem Zustand in einem Schnitt entlang der Linie III-III nach Fig. 3,
- Fig. 6: eine schematische Darstellung eines zweiten Ausführungsbeispiels eines erfindungsgemäßen Getriebes in zusammengebautem Zustand in einem Längsschnitt,
- Fig. 7: eine schematische Darstellung eines ersten Ausführungsbeispiels eines Ausgangsorgans eines erfindungsgemäßen Getriebes in einer Explosionsdarstellung,
- Fig. 8: eine schematische Darstellung des Ausgangsorgans aus Fig. 7 in einem Längsschnitt,
- Fig. 9: eine schematische Darstellung eines zweiten Ausführungsbeispiels eines Ausgangsorgans eines erfindungsgemäßen Getriebes in einem Längsschnitt,
- Fig. 10: eine schematische Darstellung des Ausgangsorgans aus Fig. 9 in einer Explosionsdarstellung,
- Fig. 11: eine schematische Darstellung eines dritten Ausführungsbeispiels eines Ausgangsorgans eines erfindungsgemäßen Getriebes in einer Explosionsdarstellung in einer ersten Ansicht,
- Fig. 12: eine schematische Darstellung des Ausgangsorgans aus Fig. 11 in einer Explosionsdarstellung in einer gegenüber Fig. 11 um 180° gedrehten zweiten Ansicht,
- Fig. 13: eine schematische Darstellung eines vierten Ausführungsbeispiels eines Ausgangsorgans eines erfindungsgemäßen Getriebes in einer Explosionsdarstellung und
- Fig. 14: eine schematische Darstellung eines fünften Ausführungsbeispiels eines Ausgangsorgans eines erfindungsgemäßen Getriebes in einer Explosionsdarstellung.

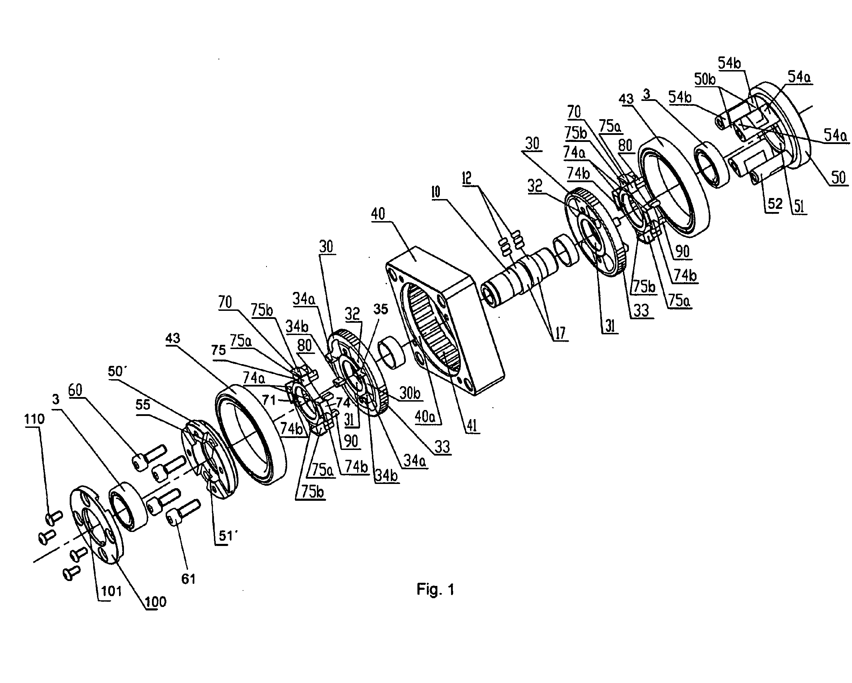

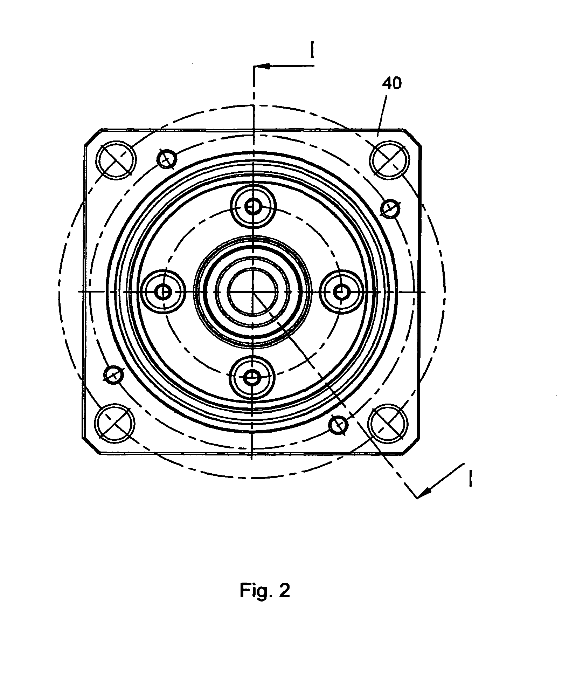

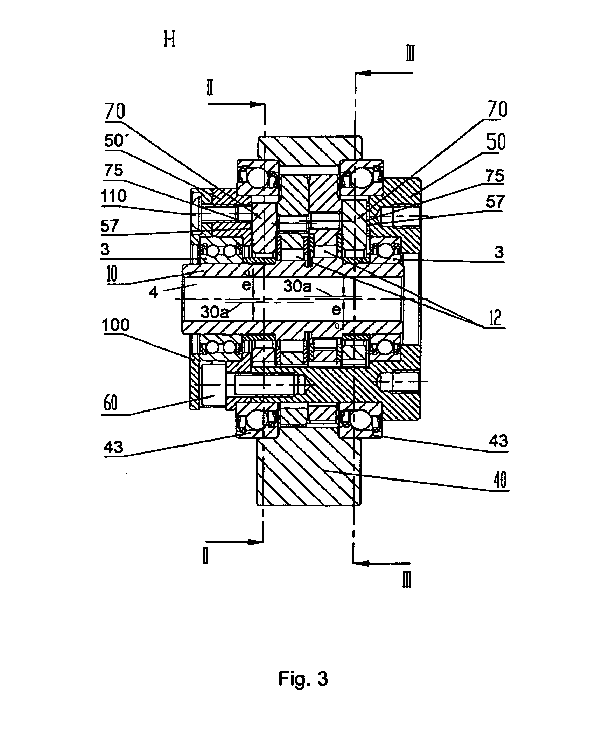

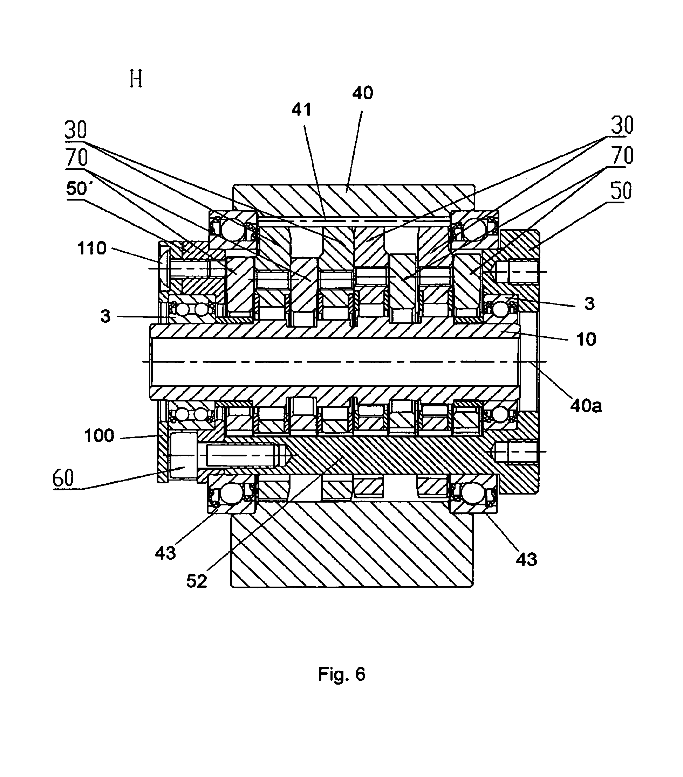

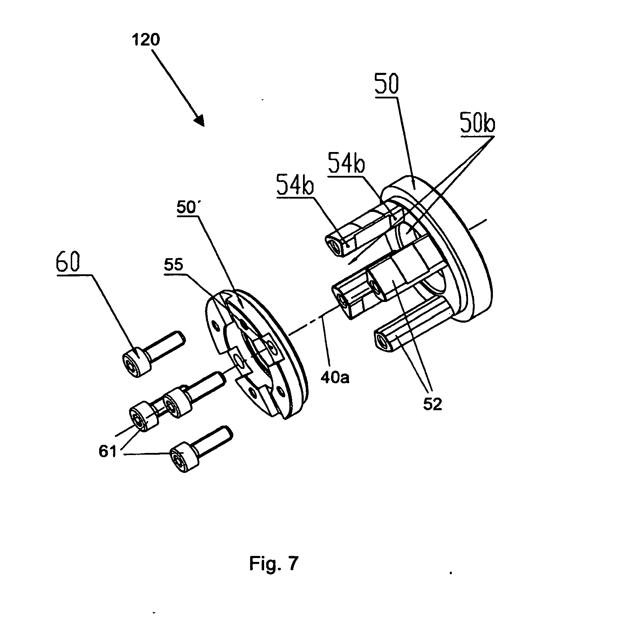

Ein in den Fig. 1 bis 5 bzw. ein in Fig. 6 dargestelltes Getriebe besteht im Wesentlichen aus einem eine Innenverzahnung 41 sowie eine Drehachse 40a aufweisenden hohlzylinderartigen Grundkörper 40. In dem Grundkörper 40 sind ein angetriebenes Eingangsorgan 10 sowie ein Ausgangsorgan 120 drehbar gelagert. Das Ausgangsorgan 120 kann beispielsweise gemäß den in den Fig. 7 bis 14 dargestellten Ausführungsbeispielen für ein Ausgangsorgan 120 ausgebildet sein. Das Ausgangsorgan 120 umfasst dabei zwei mittels Distanzkörpern 52 unverdrehbar miteinander verbindbare bzw. verbundene Drehkörper 50, 50'. Die Drehkörper 50, 50' weisen quer zur Drehachse 40a jeweils einen kreisrunden Querschnitt auf. Zwischen den Drehkörpern 50, 50' ist mindestens ein Zahnrad 30 angeordnet. Zwischen den Drehkörpern 50, 50' ist außerdem mindestens ein Transformationsmittel 70 zur Umwandlung von Planetenbewegungen des mindestens einen Zahnrades 30 in Rotationsbewegungen des Ausgangsorgans 120 angeordnet. Bei dem Getriebe weisen die Distanzkörper 52 Laufflächen 54a, 54b auf. Die Laufflächen 54a, 54b bilden Führungsbahnen von dem Ausgangsorgan 120 zugeordneten Linearführungen 50b zwischen Ausgangsorgan 120 und Transformationsmittel 70. Darüber hinaus ist bei einem solchen Getriebe vorgesehen, dass die Distanzkörper 52 jeweils einstückig ausgebildet sind, wobei sich jeder Distanzkörper 52 einstückig zumindest über die ganze freie innere Länge zwischen den beiden Drehkörpern 50, 50' erstreckt.

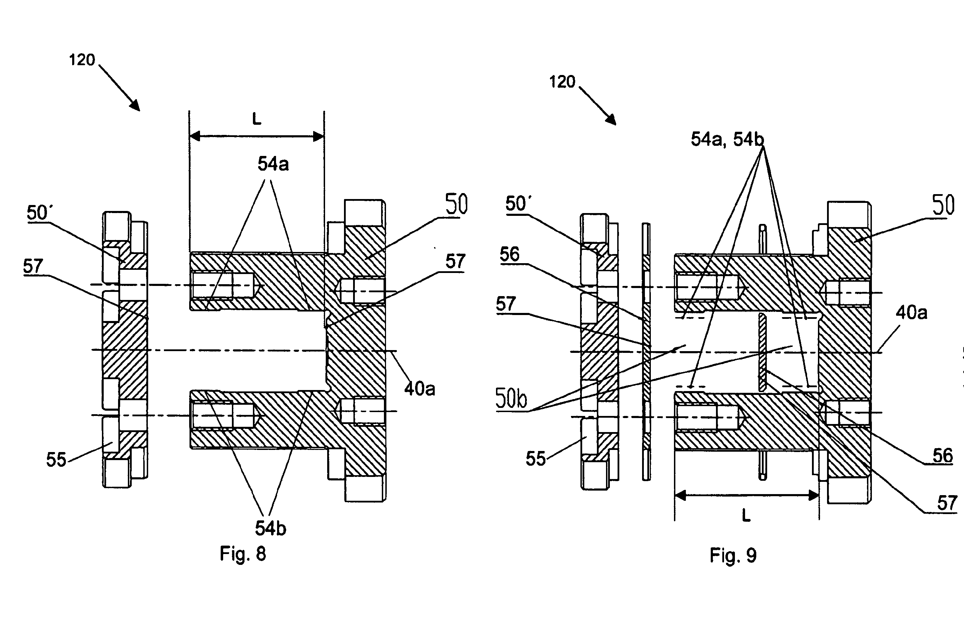

Ein solches Getriebe mit einem eine Innenverzahnung 41 sowie eine Drehachse 40a aufweisenden hohlzylinderartigen Grundkörper 40, in dem ein angetriebenes Eingangsorgan 10 sowie ein Ausgangsorgan 120 drehbar gelagert sind, wobei das Ausgangsorgan 120 zwei mittels Distanzkörpern 52 unverdrehbar miteinander verbindbare bzw. verbundene, einen quer zur Drehachse 40a kreisrunden Querschnitt aufweisenden Drehkörper 50, 50' umfasst, zwischen denen mindestens ein Zahnrad 30 sowie mindestens ein Transformationsmittel 70 zur Umwandlung von Planetenbewegungen des mindestens einen Zahnrades 30 in Rotationsbewegungen des Ausgangsorgans 120 angeordnet sind, kennzeichnet sich demnach dadurch aus, dass die Distanzkörper 52 Laufflächen 54a, 54b aufweisen, welche Führungsbahnen von dem Ausgangsorgan 120 zugeordneten Linearführungen 50b zwischen Ausgangsorgan 120 und Transformationsmittel 70 bilden, und dass die Distanzkörper 52 jeweils einstückig ausgebildet sind, wobei sich jeder Distanzkörper 52 zumindest über die ganze freie innere Länge L (vgl. Fig. 8, Fig. 9) zwischen den beiden Drehkörpern 50, 50' erstreckt.

Die in den Fig. 1 bis 6 vollständig oder teilweise dargestellten Getriebe bestehen alle aus einem eine Innenverzahnung 41 sowie eine Drehachse 40a aufweisenden hohlzylinderartigen Grundkörper 40, in dem ein angetriebenes Eingangsorgan 10 sowie ein Ausgangsorgan drehbar gelagert sind. Das Ausgangsorgan umfasst zwei Drehkörper 50, 50'. Die Drehkörper 50, 50' sind im Wesentlichen scheibenförmig ausgebildet. Die scheibenförmigen Partien der Drehkörper 50, 50' sind mit Distanzkörpern 52 mit Abstand zueinander angeordnet. Die Drehkörper 50, 50' sind fest miteinander verbindbar bzw. verbunden. Die Drehkörper 50, 50' weisen quer zur Drehachse 40a einen kreisrunden Querschnitt auf. Zwischen den Drehkörpern 50, 50' sind im Fall des in den Fig. 1 bis 5 dargestellten Getriebes zwei, im Fall des in Fig. 6 dargestellten Getriebes vier Zahnräder 30 angeordnet. Die Zahnräder 30 kämmen mit ihren Außenverzahnungen 33 mit der Innenverzahnung 41 des Grundkörpers 40. Zwischen den Drehkörpern 50, 50' sind außerdem in Form von Transformationselementen 70 ausgebildete Mittel zur Umwandlung von Planetenbewegungen der Zahnräder 30 in Rotationsbewegungen des Ausgangsorgans angeordnet. Darüber hinaus kann ein mit einer Stirnseite des Grundkörpers fest verbindbarer, nicht dargestellter, ringartiger Haltekörper vorgesehen sein. Das durch die Drehkörper 50, 50' gebildete Ausgangsorgan stützt sich über Wälzelemente bzw. über mindestens ein z.B. als Wälzlager, vorzugsweise als sowohl radiale als auch axiale Kräfte aufnehmendes Wälzlager, ausgeführtes Lager 43 sowohl in axialer, als auch in radialer Richtung unmittelbar am Grundkörper 40 ab, bzw. bei einer Ausführung mit Haltekörper an dem an der Stirnseite angeordneten Haltekörper.

Der funktionale Aufbau der zwischen den Drehkörpern 50, 50' in dem Grundkörper 40 angeordneten beweglichen Teile ist dabei in allen in den Figuren 1 bis 6 dargestellten Ausführungsbeispielen identisch. Ein Eingangsorgan 10 in Form einer Eingangswelle weist im Fall des in den Fig. 1 bis 5 dargestellten Getriebes zwei exzentrische Abschnitte 17 auf, die um 180° gegeneinander versetzt angeordnet sind. Im Fall des in Fig. 6 dargestellten Getriebes weist die Eingangswelle vier exzentrische Abschnitte 17 auf, die beispielsweise um 90° oder um 180° gegeneinander versetzt angeordnet sind. Die exzentrischen Abschnitte 17 sind um eine Exzentrizität e gegenüber der Drehachse 40a versetzt. Auf jedem der exzentrischen Abschnitte 17 ist ein Zahnrad 30 drehbar gelagert. Die Exzentrizität e entspricht somit dem Abstand zwischen der Achse 30a eines Zahnrades 30 und der Drehachse 40a des Grundkörpers 40. Zwischen den exzentrischen Abschnitten 17 und den Zahnrädern 30 sind zur Verringerung der Reibungsverluste Wälzelemente 12 angeordnet, welche jeweils am Außenumfang der exzentrischen Abschnitte 17 abrollen. Hierzu sind am Umfang der exzentrischen Abschnitte 17 Laufbahnen für die Wälzelemente 12 ausgebildet, die als Lagerkörper für die Zahnräder 30 dienen. Die Zahnräder 30 weisen Außenverzahnungen 33 und zentrale Öffnungen mit inneren Laufflächen 31 für die Wälzkörper 12 auf.

Die Zahnräder 30 haben jeweils mehrere, in radialer Richtung zu der die innere Lauffläche 31 aufweisenden zentralen Öffnung versetzt angeordnete, durchgehende axiale Öffnungen 32. Diese sind jeweils gleichmäßig um die Achsen 30a der Zahnräder 30 verteilt. Die Achsen 30a der Zahnräder 30 verlaufen parallel zur Drehachse 40a des Eingangsorgans 10 und des durch die zwei Drehkörper 50, 50' gebildeten Ausgangsorgans. Die Drehachse 40a ist gleichzeitig die Symmetrieachse des Grundkörpers 40. Das Eingangsorgan 10 kann z.B. mittels einer Feder mit der Motorwelle eines Antriebsmotors verbunden werden. Der Antriebsmotor kann mit dem als Hohlrad ausgebildeten Grundkörper 40 mit Innenverzahnung 41 z.B. mittels eines nicht dargestellten Deckels und durch Schrauben verbunden werden. Der Antriebsmotor kann z.B. auf der dem im Grundkörper 40 gelagerten Drehkörper 50 abgewandten Seite des Getriebes angeordnet sein bzw. werden. Diese Seite bildet dann die Antriebsseite, wohingegen der im Grundkörper 40 gelagerte Drehkörper 50 die Abtriebseite des Getriebes bildet.

Die Zahnräder 30 sind zwischen den zwei mit kreisrunder Außenkontur bzw. mit einem quer zur Drehachse 40a kreisrunden Querschnitt ausgebildeten Drehkörpern 50, 50' angeordnet. Sie sind durch Verbindungselemente 60 lösbar betrieblich miteinander verbunden und bilden gemeinsam das Ausgangsorgan des Getriebes. Am Drehkörper 50 sind die Distanzkörper 52 angeordnet, welche Öffnungen und Gewindeaufnahmen zur Aufnahme der Verbindungselemente 60 aufweisen. Die Distanzkörper 52 durchqueren berührungsfrei die Öffnungen 32 der Zahnräder 30, so dass die Drehkörper 50, 50' durch die Zahnräder 30 hindurch fest miteinander verbindbar sind. Das durch die beiden miteinander verbundenen Drehkörper 50, 50' gebildete Ausgangsorgan ist in Bezug auf den Grundkörper 40 mit Innenverzahnung 41 um die Drehachse 40a drehbar gelagert.

Die Innenverzahnung 41 des Grundkörpers 40 kämmt mit der Außenverzahnung der Zahnräder 30. Die Achsen der Zahnräder 30 sind parallel zur Drehachse 40a des Grundkörpers 40 angeordnet, jedoch um die Exzentrizität e versetzt.

Die Drehkörper 50, 50' sind mit Laufflächen 54a, 54b versehen, die Führungsbahnen einer eine Linearführung 50b definieren. Die Linearführung 50b ist quer zur Drehachse 40a der Drehkörper 50, 50' orientiert. Jedes Zahnrad 30 ist mit Führungsbahnen 34a, 34b versehen, die eine Linearführung 30b definieren. Dabei ist diese Linearführung 30b quer zur Achse 30a des Zahnrades 30 orientiert. An beiden Seiten des Getriebes ist zwischen dem Drehkörper 50 bzw. 50' und dem Zahnrad 30 ein als Ring ausgebildetes Transformationselement 70 angeordnet.

Das Transformationselement 70 umfasst eine ringförmige, zentrale Partie 73 sowie vier an der ringförmigen, zentralen Partie 73 angeordnete Arme 74. In der ringförmigen, zentralen Partie 73 ist eine Öffnung 71 angeordnet, durch die das Eingangsorgan berührungsfrei hindurchgeführt ist. Das eine Paar gegenüberliegender Arme 75 weist Führungsbahnen 75a, 75b auf, durch die das Transformationselement 70 in der Linearführung 50b des Ausgangsorgans verschiebbar angeordnet ist. Das zweite Paar gegenüberliegender Arme 74 weist ebenfalls parallele Führungsbahnen 74a, 74b auf, durch welche das Transformationselement 70 in der Linearführung 30b des Zahnrades 30 verschiebbar angeordnet ist. Zwischen den Führungsbahnen 54a und 54b der Linearführung 50b des Ausgangsorgans und den Führungsbahnen 75a, 75b des Transformationselements 70, durch welche das Transformationselement 70 in der Linearführung 50b verschiebbar angeordnet ist, sind zylindrische Wälzelemente 80 angeordnet. Zwischen den Führungsbahnen 34a und 34b der Linearführung 30b am Zahnrad 30 und den Führungsbahnen 74a, 74b des Transformationselements 70, durch welche das Transformationselement 70 in der Linearführung 30b verschiebbar angeordnet ist, sind ebenfalls zylindrische Wälzelemente 90 angeordnet. In beiden Fällen ist eine Führung des Transformationselements 70 mittels Wälzelementen 80, 90 gewährleistet, wenn es gegenüber dem Zahnrad 30 sowie gegenüber dem Ausgangsorgan und der Drehachse 40a Oszillationsbewegungen ausübt. An den Armen 74, 75 des Transformationselements 70 sind zur Begrenzung der Führungsbahnen 74a, 74b, 75a, 75b Grenzflächen 76, 76' ausgebildet, die die Bewegung der Wälzelemente 80, 90 begrenzen.

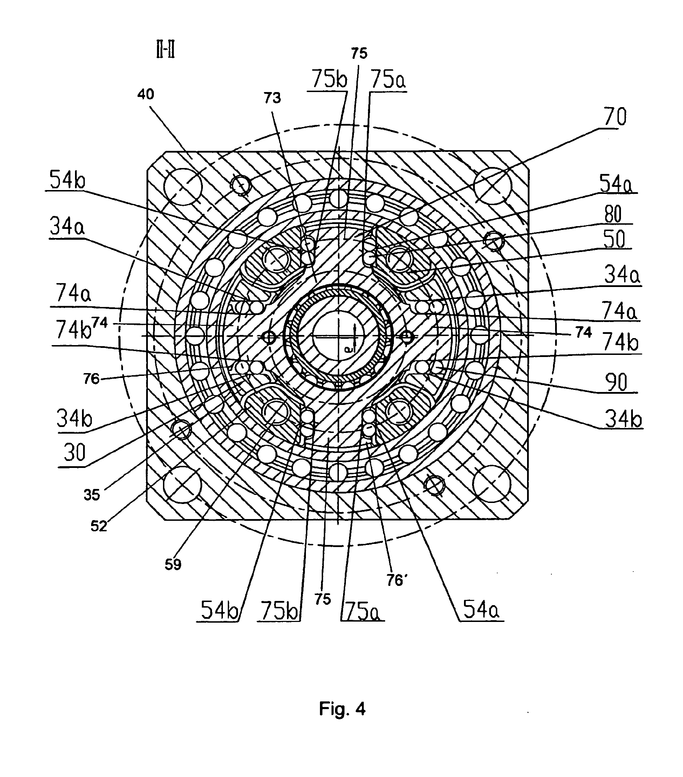

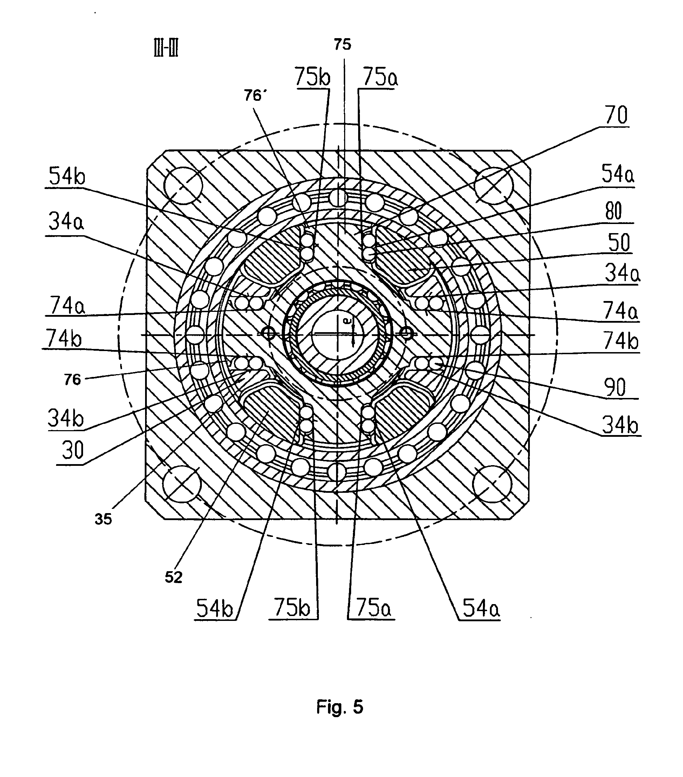

In den Fig. 4 und 5 ist hierzu im Detail dargestellt, wie die Wälzelemente 80, 90 zwischen den an den Armen 74 bzw. 75 ausgebildeten Führungsbahnen 74a, 74b bzw. 75a, 75b in montiertem Zustand angeordnet sind. Die Grenzflächen 76, 76' begrenzen die effektive Länge der Führungsbahnen 74a, 74b bzw. 75a, 75b an den Armen 74, 75, entlang denen sich die Wälzelemente 80, 90 bewegen können.

Das Transformationselement 70 besitzt in zwei orthogonal zueinander angeordneten Richtungen Führungs- bzw. Laufflächen 74a, 74b bzw. 75a, 75b, die mit den Linearführungen 50b und 30b des Ausgangsorgans bzw. des Zahnrads 30 derart korrespondieren, dass das Transformationselement 70 gegenüber dem Ausgangsorgan einerseits und gegenüber dem Zahnrad 30 andererseits in zwei senkrecht zueinander verlaufenden Richtungen verschiebbar angeordnet ist bzw. Translationsbewegungen in einer senkrecht zur Drehachse 40a verlaufenden Ebene ausführen kann. Die eine Linearführung 50b ist am Ausgangsorgan ausgebildet, während das Transformationselement 70 in der anderen Richtung in der Linearführung 30b am Zahnrad 30 verschiebbar angeordnet ist.

Die Laufflächen 54a und 54b der Führungsbahnen des durch die mittels der Distanzkörper 52 verbundenen Drehkörper 50, 50' gebildeten Ausgangsorgans der Linearführung 50b zwischen Ausgangsorgan und Transformationselement 70 sind an den Distanzkörpern 52 angeordnet. Die Laufflächen 54a und 54b sind direkt an den die Drehkörper 50, 50' miteinander verbindenden Distanzkörpern 52 ausgebildet.

Beide Drehkörper 50, 50' sowie die Transformationselemente 70 besitzen zentrale Öffnungen 51, 51' bzw. 71. Das Eingangsorgan 10 ist an seinen beiden Enden in den zentralen Öffnungen 51, 51 ' der Drehkörper 50, 50' gelagert. Die zentralen Öffnungen 51, 51' können an ihren Innenflächen als Laufbahnen für Lagerkörper ausgebildet sein. Ebenfalls können in den zentralen Öffnungen 51, 51' Lager 3, beispielsweise Wälzlager 3, angeordnet sein. Mittels der Lager 3 sind die Enden des Eingangsorgans 10 in den zentralen Öffnungen 51, 51' der Drehkörper 50, 50' gelagert. Das Eingangsorgan 10 durchquert kontaktfrei die zentrale Öffnung 71 des Transformationselements 70. Der Innendurchmesser der zentralen Öffnung 71 ist hierbei um mindestens 2e größer als der Außendurchmesser desjenigen Abschnitts des Eingangsorgans 10, welcher die zentrale Öffnung 71 durchquert.

Die Laufflächen 34a, 34b der Führungsbahnen der Linearführung 30b zwischen Zahnrad 30 und Transformationselement 70, mit denen jedes Zahnrad 30 versehen ist, sind an einander gegenüberliegenden Seiten der Vorsprünge 35 ausgebildet. Sie sind durch mittig gegenüberliegende Paare gebildet, die an der Stirnseite des Zahnrades 30 ausgebildet sind. Die axialen Öffnungen 32 des Zahnrades 30 sind auf einem Kreisbogen gleichmäßig verteilt zwischen den Vorsprüngen 35 angeordnet. Die Führungsbahnen 34a, 34b sind direkt an den Vorsprüngen 35 des Zahnrades 30 ausgebildet. Sie können jedoch auch als flache Leisten ausgeführt sein, die fest an den gegenüberliegenden Seiten der Vorsprünge 35a, 35b ausgebildet sind.

Die Innenverzahnung 41 des Grundkörpers 40 kann beispielsweise aus nadelförmigen Wälzkörpern bestehen, die in Axialnuten am Innenumfang des Grundkörpers 40 gelagert sind. Die Axialnuten sind am Innenumfang des Grundkörpers 40 gleichmäßig verteilt. Die Zähne der Innenverzahnung 41 bestehen somit vorzugsweise aus liegenden Zylindern. Die Außenverzahnung 33 der Zahnräder 30 ist dann entsprechend wellenförmig ausgebildet.

Am Drehkörper 50 sind die Distanzkörper 52 einstückig ausgebildet. Diese Distanzkörper 52 durchqueren mit Spiel die axialen Öffnungen 32 der Zahnräder 30. Die Distanzkörper 52 sind mit axialen Gewindeaufnahmen 59 versehen. Sie sind zur Aufnahme der Verbindungselemente 60 vorgesehen. Die Verbindungselemente 60 können z.B. als Stifte oder als Schrauben 60 ausgebildet sein. Durch Anziehen der als Schrauben 60 ausgeführten Verbindungselemente 60 definieren die Stirnseiten der Distanzkörper 52 die Lage der beiden Drehkörper 50, 50'.

Im Gegensatz zum Drehkörper 50 weist der Drehkörper 50' keine einstückig mit dem Drehkörper 50 ausgebildeten, sich einstückig zumindest über die gesamte freie Länge zwischen den Drehkörpern 50, 50' erstreckende Distanzkörper 52 auf. Stattdessen kann der Drehkörper 50' axiale Aufnahmen 53 für die Distanzkörper 52 aufweisen. Ein Sicherungsdeckel 100 mit einer zentralen Öffnung 101 dient dazu, die Verbindungselemente 60, mit denen der Drehkörper 50' an den einstückig mit dem Drehkörper 50 ausgebildeten Distanzkörpern 52 verbunden ist, gegen ein Herausfallen bzw. -drehen zu sichern. Die zentrale Öffnung 101 weist eine Hintergreifung auf, welche das auf der Seite des Drehkörpers 50' angeordnete Lager, mit der das Eingangsorgan im Ausgangsorgan gelagert ist, am Herausfallen hindert. Die zentrale Öffnung 51 des Drehkörpers 50 ist ebenso mit einer derartigen Hintergreifung versehen. Durch Aufsetzen des Sicherungsdeckels 100 wird somit die Montage eines erfindungsgemäßen Getriebes abgeschlossen und sämtliche im Getriebe angeordneten Teile an einem Herausfallen aus ihrer betriebsgemäßen Position gehindert. Zur Befestigung des Sicherungsdeckels 100 sind Verbindungselemente 100, beispielsweise Gewindeschrauben 100 oder -bolzen 100 vorgesehen. Diese können selbstsichernd ausgeführt sein.

Die Wälzlagerung zwischen Grundkörper 40 und dem durch die Drehkörper 50, 50' gebildeten Ausgangsorgan kann durch zylinderförmige Wälzelemente gebildet sein. Diese rollen auf an dem Grundkörper 40 und dem Drehkörper 50 ausgebildeten, um die Drehachse 40a geschlossen umlaufenden Laufflächen ab. Alternativ kann auch, wie in den Fig. 1 bis 6 dargestellt, jeweils ein Lager 43 zwischen Grundkörper 40 und den Drehkörpern 50, 50' angeordnet sein.

Zur Gewichtsverringerung weist das Eingangsorgan 10 vorzugsweise eine koaxial zur Drehachse 40a verlaufende, durchgehende Öffnung 4 auf. Diese Öffnung 4 kann gleichzeitig zur Aufnahme der Antriebswelle eines Antriebsmotors dienen und/oder zur Verbindung mit dieser Antriebswelle.

Umlaufende Dichtungen können vorgesehen sein, um das Eindringen von Verunreinigungen in das Getriebe zu unterbinden.

Wichtig ist hervorzuheben, dass bei dem erfindungsgemäßen Getriebe grundsätzlich nach Belieben das Eingangsorgan, das Ausgangsorgan oder der Grundkörper Antriebsseite, Abtriebsseite oder feststehendes Element sein können, ohne dass die prinzipielle Funktion des Getriebes beeinträchtigt wird. Lediglich das Übersetzungsverhältnis verändert sich hierdurch. Bei den Getrieben in den dargestellten Ausführungsbeispielen ist jeweils das Eingangsorgan 10 zum Antrieb durch einen Antriebsmotor vorgesehen. Die Antriebsseite wird dabei z.B. durch diejenige Seite des Grundkörpers 40 gebildet, auf der der Drehkörper 50 angeordnet ist.

In den Fig. 7 bis 14 sind verschiedene Ausführungsbeispiele von Ausgangsorganen dargestellt, die durch betrieblich mittels der Distanzkörper 52 verbundene bzw. verbindbare Drehkörper 50, 50' gebildet sind.

Allen Ausführungsbeispielen ist dabei gemein, dass die Distanzkörper 52 einstückig ausgebildet sind. Die Distanzkörper 52 erstrecken sich so einstückig mindestens über die gesamte freie Länge zwischen den beiden Drehkörpern 50, 50'.

Ferner ist allen Ausführungsbeispielen gemein, dass die Laufflächen 54a, 54b an den Distanzkörpern 52 angeordnet sind, so dass die Führungsbahnen der dem Ausgangsorgan zugeordneten Linearführungen 50b zwischen Transformationskörper 70 und Ausgangsorgan durch die Distanzkörper 52 gebildet werden.

Bei den in den Fig. 7 und 8 sowie 9 und 10 dargestellten Ausführungsbeispielen von Ausgangsorganen erfindungsgemäßer Getriebe sind die Distanzkörper 52 integraler Bestandteil eines Drehkörpers 50, 50', vorzugsweise des Drehkörpers 50. Am Drehkörper 50' können zusätzliche Ausnehmungen 55 zur Aufnahme der Köpfe 61 der Verbindungselemente 60 vorgesehen sein.

Bei dem Ausgangsorgan in den Fig. 7 und 8 bestehen beide Drehkörper 50, 50' und auch die als integrale Bestandteile des Drehkörpers 50 ausgebildeten Distanzkörper 52 aus gehärtetem Werkstoff.

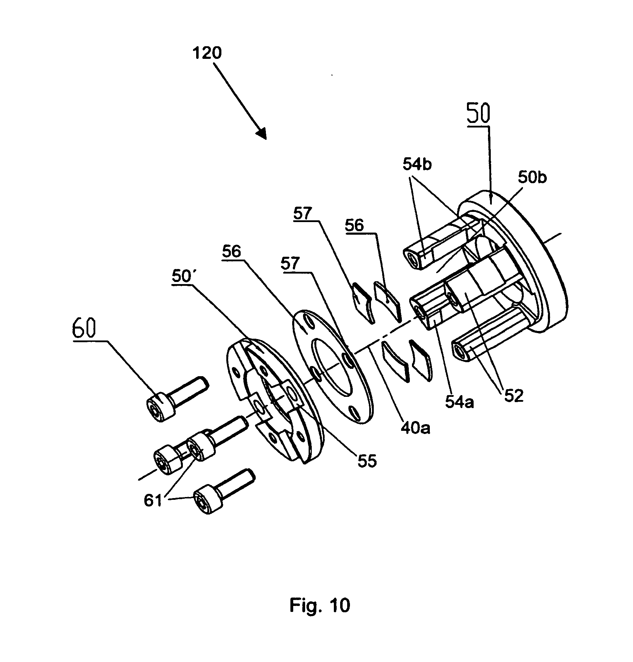

Bei dem Ausgangsorgan in den Fig. 9 und 10 bestehen beide Drehkörper 50, 50' und auch die als integrale Bestandteile des Drehkörpers 50 ausgebildeten Distanzkörper 52 aus ungehärtetem Werkstoff. Lediglich die Oberflächen der Distanzkörper 52, die die an den Distanzkörpern 52 ausgebildeten bzw. angeordneten Laufflächen 54a, 54b bilden, sind gehärtete Oberflächen. Zwischen den Drehkörpern 52 des Ausgangsorgans sind Teile 56 mit gehärteten Oberflächen, beispielsweise Plättchen 56 aus gehärtetem Werkstoff, angeordnet. Diese bilden senkrecht zur Drehachse 40a angeordnete Gleitflächen 57 zwischen den Transformationsmitteln 70 und den Drehkörpern 50, 50' des Ausgangsorgans. Die Plättchen 56 können beispielsweise mit den Drehkörpern 50, 50' des Ausgangsorgans verbunden werden.

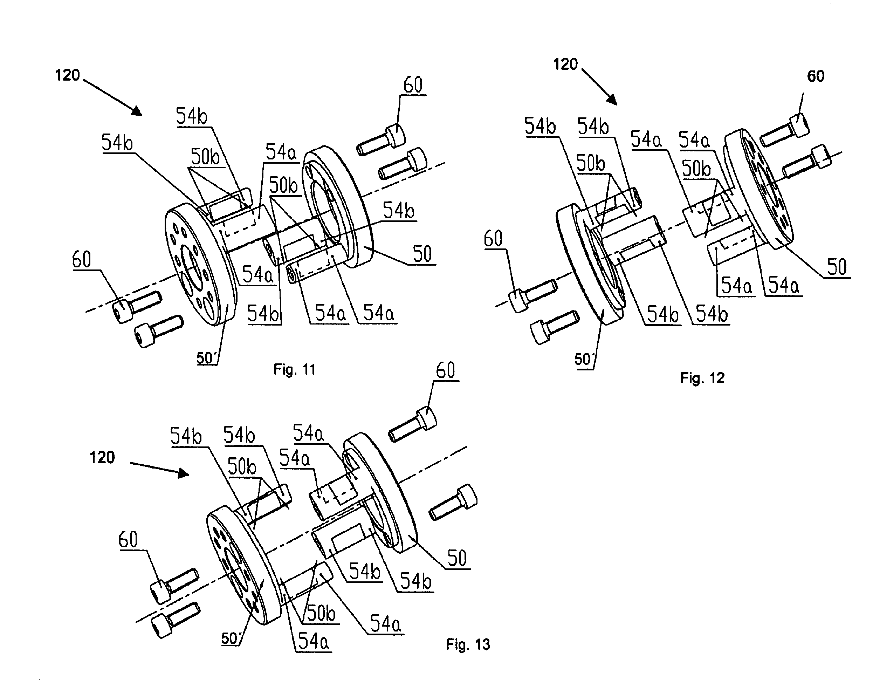

Bei einem in den Fig. 11 und 12 dargestellten Ausgangsorgan sind benachbarte Distanzkörper 52 paarweise integrale Bestandteile des einen bzw. des anderen Drehkörpers 50, 50'.

Bei einem in Fig. 13 dargestellten Ausgangsorgan sind einander diagonal gegenüberliegende Distanzkörper 52 integrale Bestandteile des einen bzw. des anderen Drehkörpers 50, 50'.

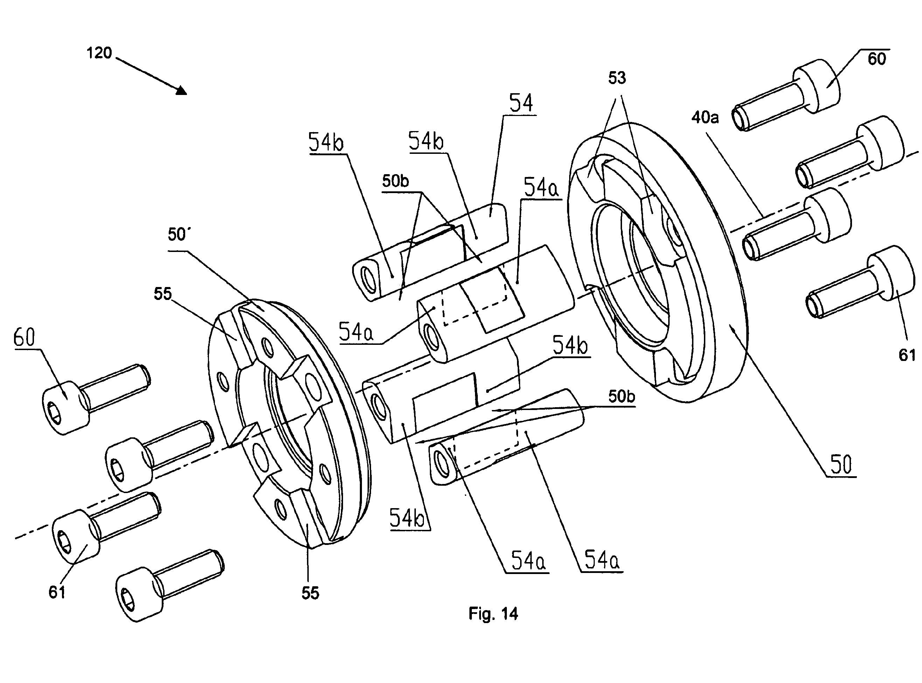

Bei einem in Fig. 14 dargestellten Ausgangsorgan sind die Distanzkörper 52 von den Drehkörpern 50, 50' unabhängige Einzelteile, die mit beiden Drehkörpern 50, 50' betriebsgemäß verbunden bzw. verbindbar sind.

Generell kann an den Stellen eines Drehkörpers 50, 50', an denen ein Distanzkörper 52 mit diesem betriebsgemäß verbunden bzw. verbindbar ist, jeweils eine Ausnehmung 53, z.B. in Form einer Aufnahme 53, zur Aufnahme des Distanzkörpers 52 ausgebildet sein. Die Ausnehmung 53 bzw. Aufnahme 53 kann vorzugsweise mit der Querschnittsform des Distanzkörpers 52 korrespondieren. Dies ist beispielhaft in Fig. 14 dargestellt.

Wichtig ist hervorzuheben, dass die beschriebenen Ausgestaltungen der Laufflächen 54a, 54b und Gleitflächen 57, wie in den Ausführungsbeispielen der Fig. 7 bis 10 dargestellt, auch bei allen anderen Ausführungsbeispielen der in den Fig. 1 bis 6 und 11 bis 14 dargestellten Ausgangsorgane angewandt werden können.

Die Erfindung ist insbesondere im Bereich der Herstellung von Planeten- oder Zykloidgetrieben gewerblich anwendbar, beispielsweise für den Einsatz in Industrierobotern, für elektrische Parkbremsen in Kraftfahrzeugen oder ganz allgemein für Anwendungen, welche in einem möglichst kompakten Bauraum ein leichtgewichtiges Getriebe mit hohem Übersetzungsverhältnis und hohen Leistungsdaten erfordern.

### Bezugszeichenliste

- 3: Lager
- 4: durchgehende Öffnung am Eingangsorgan
- 10: Eingangsorgan
- 12: Wälzelement
- 17: exzentrischer Abschnitt
- 30: Zahnrad
- 30a: Achse des Zahnrads
- 30b: Linearführung am Zahnrad
- 31: innere Lauffläche
- 32: Öffnung
- 33: Außenverzahnung
- 34a, 34b: Führungsbahnen der Linearführung am Zahnrad
- 35: Vorsprünge am Zahnrad
- 40: Grundkörper
- 40a: Drehachse
- 41: Innenverzahnung am Grundkörper
- 43: Lager
- 50,50': Drehkörper
- 50b: Linearführung
- 51, 51': zentrale Öffnung
- 52: Distanzkörper
- 53: axiale Aufnahmen in Distanzkörpern
- 54a, 54b: Laufflächen der Führungsbahnen der Linearführung des Ausgangsorgans
- 55: Ausnehmungen
- 56: Plättchen
- 57: Gleitfläche
- 59: Gewindeaufnahmen
- 60: Verbindungselement
- 61: Kopf eines Verbindungselements
- 70: Transformationselement
- 71: zentrale Öffnung im Transformationselement
- 73: ringförmige zentrale Partie des Transformationselements
- 74: Arm des Transformationselements
- 74a, 74b: Laufflächen der Führungsbahnen des Transformationselements der Linearführung zwischen Zahnrad und Transformationselement
- 75: Arm des Transformationselements
- 75a, 75b: Laufflächen der Führungsbahnen des Transformationselements der Linearführung zwischen Ausgangsorgan und Transformationselement
- 76, 76': Grenzflächen der Laufflächen der Führungsbahnen des Transformationselements
- 80: Wälzelemente
- 90: Wälzelemente
- 100: Sicherungsdeckel
- 101: Öffnung
- 110: Verbindungselement
- 120: Ausgangsorgan

- e: Exzentrizität
- L: freie innere Länge

## Patentansprüche

1. Getriebe mit einem eine Innenverzahnung (41) sowie eine Drehachse (40a) aufweisenden hohlzylinderartigen Grundkörper (40), in dem ein angetriebenes Eingangsorgan (10) sowie ein Ausgangsorgan (120) drehbar gelagert sind, wobei das Ausgangsorgan (120) zwei mittels Distanzkörpern (52) unverdrehbar miteinander verbundene, einen quer zur Drehachse (40a) kreisrunden Querschnitt aufweisende Drehkörper (50, 50') umfasst, zwischen denen mindestens ein Zahnrad (30) sowie mindestens ein Transformationsmittel (70) zur Umwandlung von Planetenbewegungen des Zahnrades (30) in Rotationsbewegungen des Ausgangsorgans (120) angeordnet sind, wobei die Distanzkörper (52) Laufflächen (54a, 54b) aufweisen, welche Führungsbahnen von dem Ausgangsorgan (120) zugeordneten Linearführungen (50b) zwischen Ausgangsorgan (120) und Transformationsmittel (70) bilden, und wobei die Distanzkörper (52) jeweils einstückig ausgebildet sind,
**dadurch gekennzeichnet,**
**dass** sich jeder Distanzkörper (52) einstückig zumindest über die ganze freie innere Länge (L) zwischen den beiden Drehkörpern (50, 50') erstreckt.

2. Getriebe nach Anspruch 1,
**dadurch gekennzeichnet,**
**dass** die Distanzkörper (52) integraler Bestandteil eines Drehkörpers (50, 50') sind.

3. Getriebe nach Anspruch 1,
**dadurch gekennzeichnet,**
**dass** einander diagonal gegenüberliegende Distanzkörper (52) integrale Bestandteile des einen bzw. des anderen Drehkörpers (50, 50') sind.

4. Getriebe nach Anspruch 1,
**dadurch gekennzeichnet,**
**dass** benachbarte Distanzkörper (52) paarweise integrale Bestandteile des einen bzw. des anderen Drehkörpers (50, 50') sind.

5. Getriebe nach Anspruch 1,
**dadurch gekennzeichnet,**
**dass** die Distanzkörper (52) von den Drehkörpern (50, 50') unabhängige Einzelteile sind, die mit beiden Drehkörpern (50, 50') verbunden sind.

6. Getriebe nach einem der vorhergehenden Ansprüche,
**dadurch gekennzeichnet,**
**dass** an den Stellen eines Drehkörpers (50, 50'), an denen ein Distanzkörper (52) mit diesem verbunden ist, jeweils eine Ausnehmung (53) zur Aufnahme des Distanzkörpers (52) ausgebildet ist.

7. Getriebe nach Anspruch 6,
**dadurch gekennzeichnet,**
**dass** die Ausnehmung (53) mit der Querschnittsform des Distanzkörpers (52) korrespondiert.

8. Getriebe nach einem der vorhergehenden Ansprüche,
**dadurch gekennzeichnet,**
**dass** der hohlzylinderartige Grundkörper (40) eine Innenverzahnung (41) sowie eine Drehachse (40a) aufweist, wobei die Drehkörper (50, 50') des Ausgangsorgans (120) jeweils einen quer zur Drehachse (40a) kreisrunden Querschnitt aufweisen, zwischen denen mindestens ein Zahnrad (30) sowie mindestens ein Transformationsmittel (70) zur Umwandlung von Planetenbewegungen des Zahnrades (30) in Rotationsbewegungen des Ausgangsorgans (120) angeordnet sind.

9. Getriebe nach einem der vorhergehenden Ansprüche,
**gekennzeichnet durch**
mindestens ein als ein Kreuz mit vier gleichmäßig um eine zentrale Öffnung herum angeordneten Armen (74, 75) ausgebildetes Transformationsmittel (70), von welchen zwei auf einer gemeinsamen Achse liegende Arme (75) in durch an den Distanzkörpern (52) angeordnete Laufflächen (54a, 54b) gebildete, dem Ausgangsorgan (120) zugeordnete und einander gegenüberliegende Führungsbahnen der Linearführung (50b) zwischen Ausgangsorgan (120) und Transformationsmittel (70) greifen.

## Claims

1. A transmission, having a hollow-cylindrical base body (40) with a set of internal teeth (41) and an axis of rotation (40a), in which base body a driven input device (10) and an output device (120) are rotatably supported, the output device (120) having two rotary bodies (50, 50') that are connected nonrotatably to one another by means of spacer bodies (52) and that have a circular cross section transversely to the axis of rotation (40a), between which rotary bodies at least one gear wheel (30) and at least one transformation means (70) for converting planetary motions of the gear wheel (30) into rotary motions of the output device (120) are disposed, and the spacer bodies (52) have running surfaces (54a, 54b) that form guideways of linear guides (50b) between the output device (120) and the transformation means (70), the linear guides being associated with the output device (120), and the spacer bodies (52) are each embodied in one piece,
**characterized in that**
each spacer body (52) extends in one piece over at least the entire free internal length (L) between the two rotary bodies (50, 50').

2. The transmission according to claim 1,
**characterized in that**
the spacer bodies (52) are an integral component of a rotary body (50, 50').

3. The transmission according to claim 1,
**characterized in that**
spacer bodies (52) diagonally opposite one another are integral components of one and the other rotary body (50, 50'), respectively.

4. The transmission according to claim 1,
**characterized in that**
adjacent spacer bodies (52) in pairs are integral components of one and the other rotary body (50, 50'), respectively.

5. The transmission according to claim 1,
**characterized in that**
the spacer bodies (52) of the rotary bodies (50, 50') are independent individual parts, which are connected to both rotary bodies (50, 50').

6. The transmission according to one of the foregoing claims,
**characterized in that**
at each of the locations of a rotary body (50, 50') where a spacer body (52) is connected to a rotary body, a recess (53) for receiving the spacer body (52) is formed.

7. The transmission according to claim 6,
**characterized in that**
the recess (53) is complementary to the cross-sectional shape of the spacer body (52).

8. The transmission according to one of the foregoing claims,
**characterized in that**
the hollow-cylindrical base body (40) has both a set of internal teeth (41) and an axis of rotation (40a), and the rotary bodies (50, 50') of the output device (120) each have a circular cross section transversely to the axis of rotation (40a), between which rotary bodies at least one gear wheel (30) and at least one transformation means (70) for converting the planetary motions of the gear wheel (30) into rotary motions of the output device (120) are disposed.

9. The transmission according to one of the foregoing claims,
**characterized by**
at least one transformation means (70), embodied as a cross with four arms (74, 75) distributed uniformly about a central opening, of which two arms (75) located on a common axis engage guideways of the linear guide (50b) between the output device (120) and the transformation means (70), which guideways are formed by running surfaces (54a, 54b) disposed on the spacer bodies (52) and are associated with the output device (12) and are opposite one another.

## Revendications

1. Transmission comprenant un corps de base (40) du type cylindre creux muni d'une denture intérieure (41), ainsi que d'un axe de rotation (40a), et dans lequel sont montés à rotation un organe d'entrée (10) mené, ainsi qu'un organe de sortie (120), ledit organe de sortie (120) comportant deux corps rotatifs (50, 50') qui sont reliés l'un à l'autre sans faculté de rotation, au moyen de corps d'espacement (52), sont pourvus d'une section circulaire transversalement par rapport audit axe de rotation (40a), et entre lesquels sont interposés au moins une roue dentée (30), ainsi qu'au moins un moyen de transformation (70) dévolu à la conversion de mouvements planétaires de ladite roue dentée (30) en des mouvements rotatoires dudit organe de sortie (120), lesdits corps d'espacement (52) étant dotés de surfaces de roulement (54a, 54b) qui forment, entre ledit organe de sortie (120) et ledit moyen de transformation (70), des pistes de guidage de guides linéaires (50b) associés audit organe de sortie (120), et lesdits corps d'espacement (52) offrant respectivement des réalisations monobloc,
**caractérisée par le fait**
**que** chaque corps d'espacement (52) s'étend, d'un seul tenant, au moins sur l'intégralité de la longueur libre intérieure (L) entre les deux corps rotatifs (50, 50').

2. Transmission selon la revendication 1,
**caractérisée par le fait**
**que** les corps d'espacement (52) font partie intégrante d'un corps rotatif (50, 50').

3. Transmission selon la revendication 1,
**caractérisée par le fait**
**que** des corps d'espacement (52), pointant diagonalement à l'opposé, constituent des parties intégrantes respectives de l'un ou de l'autre corps rotatif (50, 50').

4. Transmission selon la revendication 1,
**caractérisée par le fait**
**que** des corps d'espacement (52) voisins constituent, par paires, des parties intégrantes de l'un ou de l'autre corps rotatif (50, 50').

5. Transmission selon la revendication 1,
**caractérisée par le fait**
**que** les corps d'espacement (52) sont des pièces individuelles indépendantes des corps rotatifs (50, 50'), qui sont reliées à l'un et l'autre desdits corps rotatifs (50, 50').

6. Transmission selon l'une des revendications précédentes,
**caractérisée par le fait**
**qu'**un évidement (53) est respectivement pratiqué aux emplacements d'un corps rotatif (50, 50') auxquels un corps d'espacement (52) est relié à ce dernier, en vue de recevoir ledit corps d'espacement (52).

7. Transmission selon la revendication 6,
**caractérisée par le fait**
**que** l'évidement (53) concorde avec la forme de la section transversale du corps d'espacement (52).

8. Transmission selon l'une des revendications précédentes,
**caractérisée par le fait**
**que** le corps de base (40) du type cylindre creux comprend une denture intérieure (41), ainsi qu'un axe de rotation (40a), les corps rotatifs (50, 50') de l'organe de sortie (120) étant respectivement pourvus d'une section circulaire transversalement par rapport audit axe de rotation (40a), corps entre lesquels sont interposés au moins une roue dentée (30), ainsi qu'au moins un moyen de transformation (70) dévolu à la conversion de mouvements planétaires de ladite roue dentée (30) en des mouvements rotatoires dudit organe de sortie (120).

9. Transmission selon l'une des revendications précédentes,
**caractérisée par**
au moins un moyen de transformation (70) réalisé sous la forme d'une croix à quatre bras (74, 75) uniformément agencés tout autour d'un orifice central, parmi lesquels deux bras (75) disposés sur un axe commun pénètrent, entre l'organe de sortie (120) et ledit moyen de transformation (70), dans des pistes de guidage du guide linéaire (50b) qui sont mutuellement opposées, sont associées audit organe de sortie (120) et sont formées par des surfaces de roulement (54a, 54b) situées sur les corps d'espacement (52).
